# EUROPÄISCHE PATENTSCHRIFT

(11) **EP 3 526 019 B1**
(45) Veröffentlichungstag und Bekanntmachung des Hinweises auf die Patenterteilung: **26.05.2021**
(21) Anmeldenummer: 17762129.9
(22) Anmeldetag: 07.09.2017
(51) Int. Cl.: B29C 48/00, B29C 48/08, B29C 65/04, B29D 22/02, B29L 22/02, B29C 48/11, B29C 65/02, B29C 65/00, B29L 31/30, B29L 31/00, B60N 2/90

(54) **FLUIDKAMMERMATTE, VERFAHREN ZU DEREN HERSTELLUNG UND FAHRZEUGSITZ**
FLUID CHAMBER MAT, METHOD FOR THE PRODUCTION THEREOF, AND VEHICLE SEAT
GARNITURE À CHAMBRE À FLUIDE, PROCÉDÉ POUR SA FABRICATION ET SIÈGE DE VÉHICULE

(30) Priorität: 14.10.2016 DE 102016220034
(43) Veröffentlichungstag der Anmeldung: 21.08.2019
(73) Patentinhaber: Conti Temic microelectronic GmbH, 90411 Nürnberg (DE)
(72) Erfinder: STEINBERGER, Johann, 86564 Brunnen (DE); THIEL, Wolfgang, 85095 Denkendorf (DE); SCHÜTZE, Thomas, 85307 Paunzhausen (DE)
(74) Vertreter: Continental Corporation
(86) Internationale Anmeldenummer: PCT/EP2017/072475
(87) Internationale Veröffentlichungsnummer: WO 2018/068954

(56) Entgegenhaltungen:
- EP-A1- 2 607 158
- DE-A1-102005 032 549
- DE-A1-102011 085 687

## Beschreibung

### Gebiet der Technik

Die vorliegende Erfindung betrifft ein Verfahren zum Herstellen einer fluidbefüllbaren und volumenveränderlichen Fluidkammermatte, insbesondere einer Luftkammermatte für einen Fahrzeugsitz zu dessen Konturverstellung.

Des Weiteren betrifft die Erfindung eine Fluidkammermatte, vorzugsweise eine Luftkammermatte zur Verwendung als Aktuator für einen Fahrzeugsitz zu dessen Konturverstellung, aufweisend zumindest eine von zwei sich gegenüberliegenden Folienabschnitten berandete Fluidkammer.

Die Erfindung betrifft auch einen Fahrzeugsitz, der eine Fluidkammerplatte aufweist.

### Stand der Technik

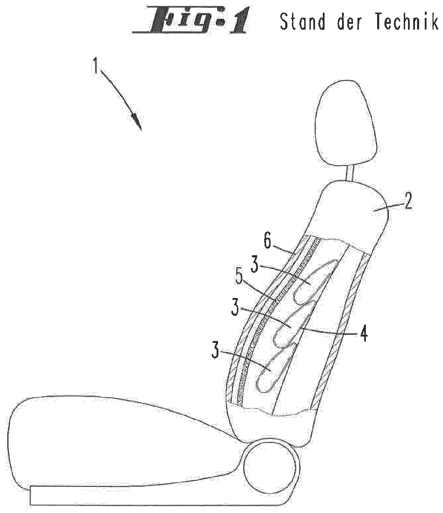

Um zum Beispiel bei einem Fahrzeugsitz eine Sitzkonturverstellung zu erreichen, ist es im Stand der Technik bekannt, eine gewisse Anzahl von Luftkammern, wie schematisch in Figur 1 gezeigt, in dem Sitz anzuordnen. Die Herstellung von Luftkammern erfolgt im Stand der Technik, indem zumindest zwei ausgestanzte Einzelfolien aufeinandergelegt und dann mittels Schweißnähten, die in einem Hochfrequenz-Schweißverfahren erzeugt werden, miteinander verbunden werden. Dadurch ist die Anzahl der zur Verfügung stehenden Luftkammern pro Fläche begrenzt. Zudem wirken die durch den Schweißprozess erzeugten Schweißnähte aufgrund ihrer Dicke störend. Es kommt hinzu, dass die Herstellung von Luftkammern von der einzelnen Folie bis hin zu einer kompletten Luftkammermatte mit einem hohen Fertigungsaufwand verbunden und dadurch kostspielig ist. Die Herstellung einer Fluidkammermatte aus einzelnen Folien ist aus DE 10 2011 089 749 A1 bekannt.

In dem Dokument DE 10 2011 085687 A1 sind ein Verfahren zur Herstellung einer mit einem Fluid befüllbaren Blase, insbesondere einer Blase für Fahrzeugsitze, sowie eine Vorrichtung zur Herstellung einer solchen Blase und die entsprechende Blase selbst offenbart. Gemäß dem Verfahren wird zunächst eine Blase durch Verschweißen von mindestens einer Folie, insbesondere einer Folie aus Kunststoff, ausgebildet. Dadurch wird die mindestens eine Folie zu einer Hülle der Blase, die einen Innenraum definiert und eine Schweißnaht 5 aufweist. Anschließend wird die Blase mit Wärme behandelt.

### Zusammenfassung der Erfindung

Im Hinblick auf das eingangs genannte Verfahren liegt der Erfindung die Aufgabe zugrunde, dieses vorteilhaft weiterzubilden, so dass insbesondere einzelne oder mehrere der genannten Nachteile möglichst weitgehend oder vollständig vermieden werden können. Im Hinblick auf die eingangs genannte Fluidkammermatte liegt der Erfindung die Aufgabe zugrunde, diese vorteilhaft weiterzubilden. Auch insofern wird angestrebt, dass einzelne oder mehrere der zuvor genannten Nachteile möglichst weitgehend oder vollständig vermieden werden können. Insbesondere wird bevorzugt, einen Aufbau für eine komplette Multi-Luftkammermatte bereitzustellen, der über eine möglichst große Anzahl von Hubelementen pro Fläche verfügt, um eine möglichst homogene Verstellfunktion zu erzielen. Insbesondere wird, auch bei der Herstellung, angestrebt, störende Schweißnähte zu vermeiden.

Im Hinblick auf den eingangs genannten Fahrzeugsitz liegt der Erfindung die Aufgabe zugrunde, diesen vorteilhaft weiterzubilden, so dass insbesondere einzelne oder mehrere der genannten Nachteile möglichst weitgehend oder vollständig vermieden werden können.

Im Hinblick auf das Verfahren schlägt die Erfindung zur Lösung der Aufgabe vor, dass dieses die folgenden Verfahrensschritte aufweist: mittels eines profilerzeugenden Durchlaufverfahrens Herstellen eines Folienprofils, das in Bezug auf einen zu der Durchlaufrichtung senkrechten Profilquerschnitt mehrere nebeneinander angeordnete, in dem Profilquerschnitt jeweils umschlossene Hohlräume aufweist, Abtrennen eines sich in Bezug auf die Durchlaufrichtung zwischen zwei Längsenden erstreckenden Längenabschnittes des Folienprofils und zur längenmäßigen Begrenzung von je zumindest einer Fluidkammer in je einem Hohlraum: an einer ersten an dem Längenabschnitt bezüglich der Durchlaufrichtung gewählten Position und an einer davon in Durchlaufrichtung beabstandeten zweiten Position jeweils Herstellen einer quer, insbesondere senkrecht, zu der Durchlaufrichtung verlaufenden Verbindung zwischen zwei sich gegenüberliegenden, den Hohlraum begrenzenden Folienbereichen und Anschließen von einer jeweiligen Fluidleitung an eine jeweilige Fluidkammer.

Das Folienprofil kann vorteilhaft auf einfache Weise als Endlos-Folienprofil hergestellt werden. Bei den angesprochenen Folienbereichen handelt es sich um Bereiche des Folienprofils. Verglichen mit herkömmlichen Herstellungsverfahren werden weniger Arbeitsschritte benötigt. Die Herstellung wird so vereinfacht und zeitlich verkürzt, so dass eine Kostenersparnis resultiert. Vorzugsweise umfasst die aus dem Folienprofil hergestellt Fluidkammermatte eine Vielzahl von Fluidkammern; sie kann insofern als Multi-Luftkammermatte bezeichnet werden. Das erfindungsgemäße Verfahren ist besonders von Vorteil zur Herstellung von Multi-Luftkammermatten mit einer vergleichsweise großen Anzahl von Fluidkammern je Flächeneinheit. Bei der Fluidleitung kann es sich vorzugsweise jeweils um einen Schlauch handeln.

Die Fluidkammermatte kann in einen Fahrzeugsitz eingebaut werden, um als Aktuator für Konturverstellungen des Fahrzeugsitzes zu dienen. Zum Beispiel kann die Fluidkammermatte in der Rückenlehne, insbesondere hinter einer Schaumstoffauflage und einem darüber befindlichen Bezug, angeordnet sein. Bei Gebrauch der Fluidkammermatte sind je nach Befüllung der einzelnen Fluidkammern (bei Befüllung mit Luft kann man auch von Luftkammer sprechen) Funktionen wie z.B. eine Lordosenunterstützung, insbesondere überlagert mit Massagefunktionalitäten, möglich.

Vorzugsweise kann der bzw. eine jeweilige Fluidleitung an eine mit einer Steuerung ausgestattete Fluidversorgungseinrichtung, zweckmäßiger Weise an eine Druckluftversorgungseinrichtung mit einer Steuerung, angeschlossen werden. Die Steuerung kann verwendet werden, um je nach Bedarf Fluid bzw. Druckluft in die Fluidkammern zuführen, um deren Volumen zu vergrößern, oder Fluid bzw. Druckluft aus den Fluidkammern abzulassen, um deren Volumen zu verkleinern.

Es bestehen zahlreiche Möglichkeiten zur bevorzugten Ausgestaltung eines erfindungsgemäßen Verfahrens:

Es besteht die Möglichkeit, dass das Folienprofil mittels eines Extrudierprozesses hergestellt wird. Dies bzw. die mögliche Herstellung mittels eines Strangpressverfahrens ermöglicht vorteilhaft die Herstellung eines Folienprofils ohne in Durchlaufrichtung verlaufende Schweißnähte, die, je nach Schweißnahtdicke, störend sein können. Die Profilform, also die Formgebung in dem zu der Durchlaufrichtung senkrecht orientierten Profilquerschnitt, kann durch die Form des Extrusionswerkzeuges bestimmt werden. Bevorzugt ist, dass während des Extrudierprozesses innerhalb einer oder mehrerer Fluidkammern je ein Hubbegrenzer, insbesondere in Gestalt einer an ihren Längsenden an gegenüberliegenden Folienbereichen angeformten Lamelle, ausgebildet wird. Dadurch kann ein gesonderter Arbeitsschritt zum Anbringen der Lamelle eingespart werden.

Alternativ zur Anwendung eines Extrudierprozesses besteht die Möglichkeit, dass das Folienprofil mittels eines Durchlauf-Schweißprozesses, insbesondere mittels eines Durchlauf-Hochfrequenzschweißprozesses, hergestellt wird, wobei zumindest zwei aneinander geführte Folienbahnen mittels mehrerer sich in der Durchlaufrichtung erstreckender Schweißnähte miteinander fluiddicht verbunden werden. Die Profilform, d. h. die Formgebung in dem zu der Durchlaufrichtung senkrecht orientierten Profilquerschnitt, kann durch die Anordnung von Elektroden in einem Durchlauf-Schweißgerät bestimmt werden.

Es besteht die Möglichkeit, dass zur Längenbegrenzung einer Fluidkammer hergestellte Verbindungen mittels eines Schweißverfahrens, insbesondere mittels eines Hochfrequenz-Schweißverfahrens, hergestellt werden. Die Profilform, d.h. die Formgebung in dem zu der Durchlaufrichtung senkrechten Profilquerschnitt, kann durch die Anordnung von HF-Schweißelektroden in einem Durchlauf-Schweißgerät bestimmt werden.

Es besteht die Möglichkeit, dass zur Längenbegrenzung einer Fluidkammer hergestellte Verbindungen mittels eines Schweißverfahrens, insbesondere mittels eines Hochfrequenz-Schweißverfahrens, hergestellt werden.

In einem Ausführungsbeispiel ist vorgesehen, dass sich die erste Position an einem Längsende des Längenabschnittes befindet, dass dort vor oder während des Herstellens der Verbindung ein Längsende der Fluidleitung zwischen zwei sich gegenüberliegenden, den Hohlraum begrenzenden Folienbereichen angeordnet wird und dass die dort hergestellte Verbindung den sich an der ersten Position um die Fluidleitung erstreckenden Hohlraumquerschnitt fluiddicht verschließt. Alternativ besteht die Möglichkeit, dass sich die erste Position an einem Längsende des Längenabschnittes befindet, dass die dort hergestellte Verbindung den vollständigen Hohlraumquerschnitt an der ersten Position fluiddicht verschließt und dass der Anschluss der Fluidleitung an die Fluidkammer fluiddicht durch einen Folienbereich, der insbesondere benachbart oder angrenzend zu der ersten oder der zweiten Position liegt, erfolgt. Im Hinblick auf die zweite Position ist bevorzugt, dass sich die zweite Position zwischen den beiden Längsenden befindet und dass die dort hergestellte Verbindung den vollständigen Hohlraumquerschnitt an der zweiten Position fluiddicht verschließt.

Eine bevorzugte Weiterbildung wird darin gesehen, dass betreffend zumindest eine Gruppe von Fluidkammern, die in dem Profilquerschnitt nebeneinander angeordnet sind, an einer jeweiligen Hohlkammer zwischen deren beiden sie längenmäßig begrenzenden Verbindungen zur Bildung von Fluidteilkammern zwei sich gegenüberliegende Folienbereiche mittels einer zumindest einen Fluiddurchlass zwischen den Fluidteilkammern belassenden Verbindung miteinander verbunden werden. Zum Beispiel kann eine solche Verbindung mittels eines Abheftverfahrens als Abheftung hergestellt werden. Das Abheften kann zum Beispiel mittels eines Schweißverfahrens, insbesondere mittels eine Hochfrequenz-Schweißverfahrens, erfolgen. Bevorzugt ist, dass mittels des Abheftens zwei die Luftkammer auf gegenüberliegenden Seiten begrenzende Folienbereiche fluiddicht miteinander verbunden werden, so dass zumindest ein in Bezug auf die Durchlaufrichtung durchgängiger Fluiddurchlass in der Fluidkammer zwischen den beiden Fluidteilkammern verbleibt. Die Abheftungen wirken somit als Überströmer zwischen den beiden an sie angrenzenden Fluidteilkammern, so dass nicht jede Fluidteilkammer direkt an eine Fluidleitung angeschlossen werden muss. Vorzugsweise kann zwischen der Abheftung und den beiden in Durchlaufrichtung verlaufenden Längsrändern der Fluidkammer jeweils ein Abstand belassen werden, so dass jeweils ein Fluiddurchlass mit einer dem Abstand entsprechenden Breite resultiert. Die Ausbildung von Abheftungen ermöglicht vorteilhaft eine feinere Unterteilung der einzelnen Luftkammern pro Fläche. Dadurch wird eine homogenere Verstellfunktion einer Sitzkontur ermöglicht, was wiederum bei Gebrauch des Fahrzeugsitzes zu einem Komfortgewinn führt. Um eine ideale Druckverteilung auf den Rücken eines Passagieres zu ermöglichen, kann mittels einer oder mehrerer Abheftungen in gewünschten Fluidkammern eine gewünschte Anzahl von zumindest einen Fluiddurchlass belassenden Stegen integriert werden; dadurch kann die Kammercharakteristik einer Multi-Fluidkammermatte optimal an die Rückenanatomie eines Passagiers angepasst werden.

Bevorzugt ist, dass die zwischen Fluidteilkammern einer Fluidkammer ausgebildeten Verbindungen in einem als Biegescharnier wirkenden Längenteilabschnitt der Fluidkammermatte nebeneinander angeordnet sind und dass zumindest eine Gruppe von an ein Längsende der Fluidkammermatte und an das Biegescharnier angrenzenden Fluidteilkammern um das Biegescharnier geschwenkt werden, insbesondere bis sie an einer zweiten Gruppe von an dieses Biegescharnier angrenzenden Fluidteilkammern anliegt. Dadurch kann vorteilhaft der beim Aufpumpen maximal mögliche Hub (bezogen auf eine Dickenrichtung der Fluidkammermatte) vergrößert, insbesondere verdoppelt werden. In diesem Zusammenhang kann von einer Mehrfachhubkammer gesprochen werden. Eine Mehrfachkammer eignet sich u.a. auch zur Erzeugung des zum Beispiel für einen Massagefunktion erforderlichen Hubes.

Zur Erzielung einer symmetrischen Druckverteilung, bspw. in der Rückenlehne eines Fahrzeugsitzes, ist bevorzugt, dass die Fluidkammermatte in Bezug auf eine Querschnittsebene, in der Verbindungen zur längenmäßigen Begrenzung von Fluidkammern ausgebildet sind, achsensymmetrisch ausgebildet wird. Bevorzugt ist, dass das Folienprofil aus Kunststoff hergestellt wird.

Im Hinblick auf eine eingangs genannte Fluidkammermatte schlägt die Erfindung zur Lösung der Aufgabe vor, dass die Fluidkammermatte unter Verwendung eines mittels eines Durchlaufverfahrens hergestellten, sich in einer Längsrichtung zwischen zwei Längsenden erstreckenden Folienprofils hergestellt ist, das in einem zu der Längsrichtung senkrechten Profilquer-schnitt mehrere neben-einander angeordnete, in dem Profilquerschnitt jeweils umschlossene Hohlräume aufweist, dass zur längenmäßigen Begrenzung von je zumindest einer Fluidkammer in je einem Hohlraum an einer ersten bezüglich der Längsrichtung gewählten Position und an einer davon in Längsrichtung beabstandeten zweiten Position jeweils eine quer, insbesondere senkrecht, zu der Längsrichtung verlaufende Verbindung zwischen zwei sich gegenüberliegenden, den Hohlraum begrenzenden Folienbereichen ausgebildet ist und dass eine jeweilige Fluidleitung an eine jeweilige Fluidkammer angeschlossen ist.

Eine vorteilhafte Ausgestaltung wird auch darin gesehen, dass betreffend zumindest eine Gruppe von Fluidkammern, die in einem Profilquerschnitt nebeneinander angeordnet sind, an einer jeweiligen Hohlkammer zwischen deren beiden sie längenmäßig begrenzenden Verbindungen zur Bildung von Fluidteilkammern zwei sich gegenüberliegende Folienbereiche mittels einer zumindest einen Fluiddurchlass zwischen den Fluidteilkammern belassenden Verbindung miteinander verbunden sind. In diesem Zusammenhang besteht die Möglichkeit, dass die zwischen zwei Fluidteilkammern einer Fluidkammer ausgebildeten Verbindungen in einem als Biegescharnier wirkenden Längenteilabschnitt der Fluidkammermatte nebeneinander angeordnet sind und dass zumindest eine Gruppe von an ein Längsende der Fluidkammermatte und an das Biegescharnier angrenzenden Fluidteilkammern um das Biegescharnier geschwenkt ist, insbesondere bis sie an einer zweiten Gruppe von an dieses Biegescharnier angrenzenden Fluidteilkammern anliegt. Zur Erzielung eines bezüglich einer Mittelachse symmetrischen Hubprofils ist bevorzugt, dass die Fluidkammermatte in Bezug auf eine Querschnittsebene, in der Verbindungen zur längenmäßigen Begrenzung von Fluidkammern ausgebildet sind, achsensymmetrisch ausgebildet ist. Vorzugsweise ist das Folienprofil aus Kunststoff hergestellt.

Die Erfindung betrifft auch einen Fahrzeugsitz, der eine Fluidkammermatte aufweist. Zur Lösung der genannten Aufgabe schlägt die Erfindung vor, dass es sich bei der Fluidkammermatte um eine erfindungsgemäße Fluidkammermatte handelt.

### Kurze Beschreibung der Zeichnungen

Der Stand der Technik und bevorzugte Ausführungsbeispiele der Erfindung werden nachfolgend mit Bezug auf die beigefügten Figuren beschrieben. Im Einzelnen zeigt:
- Fig. 1: in einer teilweise geschnittenen Seitenansicht einen aus dem Stand der Technik bekannten Fahrzeugsitz mit einer Luftkammermatte zur Konturverstellung;
- Fig. 2: in einer Draufsicht eine aus dem Stand der Technik bekannte, aus zwei zunächst getrennten Folienabschnitten mittels eines Schweißprozesses hergestellte Luftkammermatte;
- Fig. 3: eine Schnittansicht entlang Schnittebene III - III in Figur 2;
- Fig. 4: in einer Schnittansicht einen Abschnitt eines bevorzugten Ausführungsbeispiels eines Folienprofils, welches gemäß einem erfindungsgemäßen Verfahren hergestellt wurde;
- Fig. 5: eine Seitenansicht in Blickrichtung V von Figur 4;
- Fig. 6: eine teilweise aufgebrochene Seitenansicht eines bevorzugten Ausführungsbeispiels einer erfindungsgemäßen Fluidkammermatte;
- Fig. 7: einen Längsschnitt durch die in Figur 6 gezeigte Fluidkammermatte, jedoch nach dem Umklappen der beiden an die Längsenden der Fluidkammermatte angrenzenden Gruppen von Fluidteilkammern um die in Figur 6 angedeuteten geometrischen Schwenkachsen;
- Fig. 8: in einer Schnittansicht eine Abwandlung von der in Figur 7 gezeigten Anordnung und
- Fig. 9: in einer Draufsicht einen Fahrzeugsitz, in dessen Rückenlehne die in Figur 8 gezeigte Fluidkammermatte integriert ist.

### Beschreibung der Ausführungsformen

Figur 1 zeigt einen aus dem Stand der Technik bekannten Fahrzeugsitz. In dessen Rücklehne 2 ist eine mehrere Luftkammern 3 aufweisende Luftkammermatte 4 eingebaut. Über den Luftkammern 3 erstreckt sich eine Schaumstoffauflage 5 und darüber ein Bezug 6. Die Luftkammern sind mittels in Figur 1 nicht dargestellter Schlauchleitungen an einer mit Ventilen und mit einer Steuerung ausgerüsteten Druckluftversorgungseinrichtung angeschlossen. Werden die Luftkammern mit Luft befüllt, vergrößern sie ihr Volumen. Wird andererseits Luft aus den Luftkammern abgelassen, verringert sich das Volumen der Luftkammern. Auf diese Weise kann die Kontur des Fahrzeugsitzes 1 an unterschiedliche Anforderungen angepasst werden.

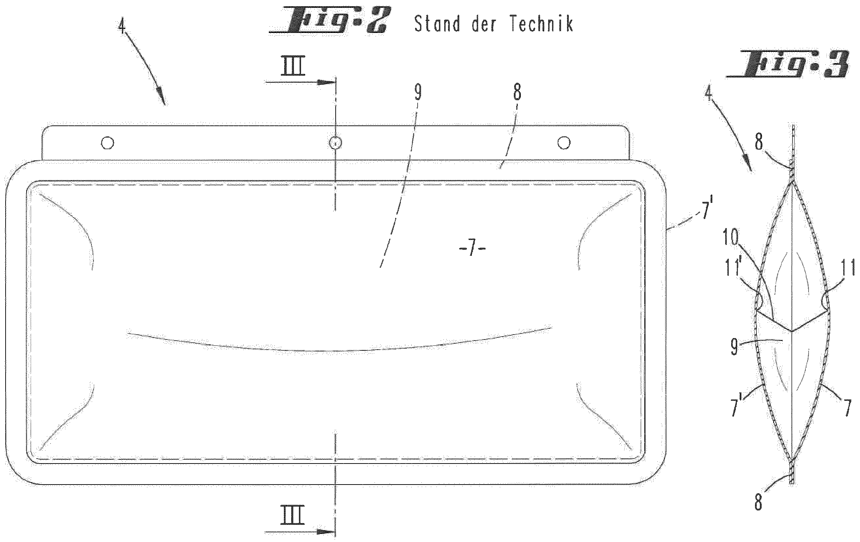

Die Figuren 2 und 3 zeigen eine aus dem Stand der Technik bekannte Luftkammermatte 4. Diese wurde in herkömmlicher Weise aus zwei ausgestanzten, also zunächst voneinander getrennten Folien 7, 7' hergestellt, indem die Folien 7, 7' mittels einer entlang ihrer Ränder umlaufenden Schweißnaht 8 miteinander verschweißt wurden, so dass eine zwischen den Folien 7, 7' auf gegenüberliegenden Seiten berandete Fluidkammer 9 an ihren Rändern luftdicht verschlossen ist. An zwei sich im Inneren der Fluidkammer 9 gegenüberliegende Folienbereiche wurde vor dem Herstellen der Schweißnaht ein sog. Hubbegrenzer 10 mittels Schweißverbindungen 11, 11' angebracht.

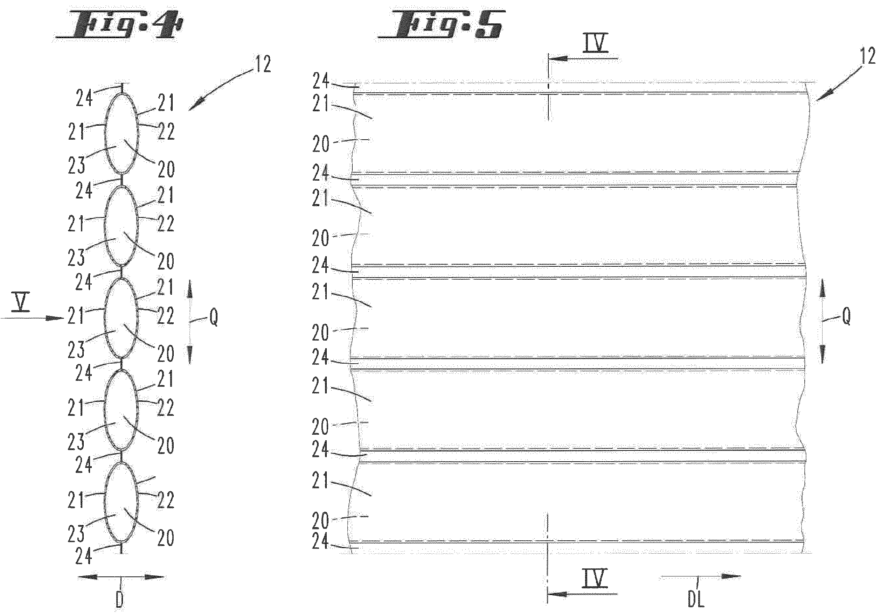

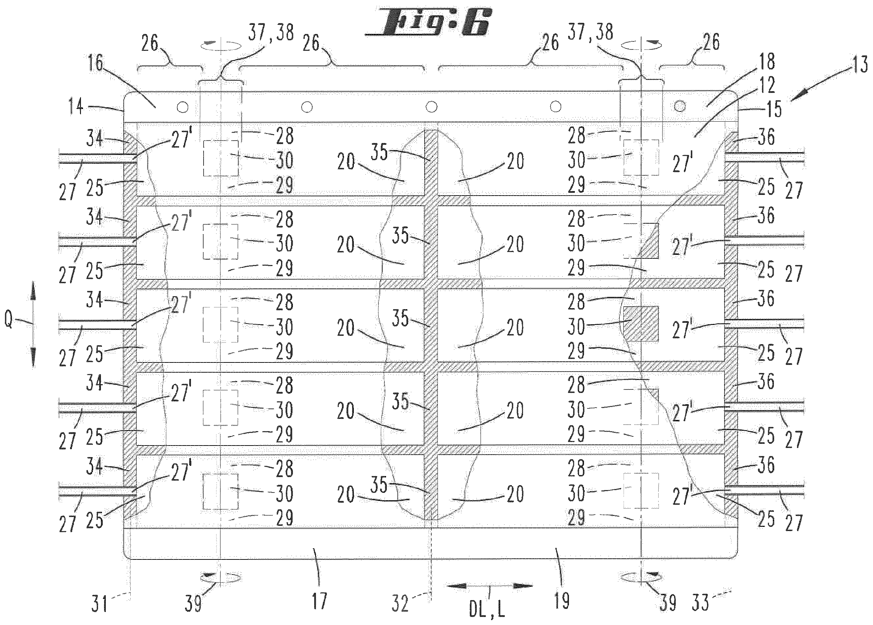

Die Figuren 4 und 5 zeigen einen Ausschnitt eines Folienprofils 12 zur Herstellung einer erfindungsgemäßen Fluidkammermatte gemäß einem bevorzugten Ausführungsbeispiel. Das Folienprofil 12 wurde in einem profilerzeugenden Durchlaufverfahren, in dem Beispiel mittels eines Strangpressverfahrens, hergestellt. Mit DL ist die Durchlaufrichtung, in der das Folienprofil 12 durch die Strangpressanlage gelaufen ist, mit Q eine dazu senkrechte Querrichtung und mit D eine zu den beiden vorgenannten Richtungen senkrechte Dickenrichtung angegeben. Diese Richtungsangaben werden in Figur 6 auch für die dort gezeigte, ausgehend von dem Folienprofil 12 hergestellte Fluidkammermatte 13 übernommen. In den Figuren 4 und 5 ist das Folienprofil 12 in Bezug auf die Durchlaufrichtung DL nur in einem Längenabschnitt und in Bezug auf die Querrichtung Q nur in einem Breitenabschnitt dargestellt. Demgegenüber zeigt Figur 6, dass sich die Fluidkammermatte 13 in der Durchlaufrichtung DL des Folienprofils 12, welche einer Längsrichtung L der Fluidkammermatte 13 entspricht, zwischen zwei Längsenden 14, 15 erstreckt. Entlang der seitlichen Längsränder 16, 17, die sich parallel zu der Längsrichtung L erstrecken, weist die Fluidkammermatte 13 je eine Lasche 18 bzw. 19, teilweise mit Lochungen, auf, mittels denen die Fluidkammermatte 13 zum Beispiel in der Rückenlehne eines Fahrzeugsitzes befestigt werden kann. Die Laschen 18, 19 sind in den Figuren 4 und 5 nicht mit dargestellt.

Das Folienprofil 12 weist in dem in Figur 4 gezeigten Profilquerschnitt mehrere nebeneinander angeordnete, in dem Profilquerschnitt jeweils umschlossene Hohlräume 20 auf. Jeder Hohlraum 20 ist auf zwei sich gegenüberliegenden Seiten von allgemein mit dem Bezugszeichen 21 bezeichneter Folie berandet. Im Beispiel handelt es sich um Kunststofffolie. Die in Figur 4 gut erkennbaren, aus Folie 21 gebildeten Umrandungen 22 der einzelnen Hohlräume 20 besitzen bei der in Figur 4 gewählten Befüllung der Hohlräume 20 mit einem Fluid 23, in dem Beispiel Luft, eine ovale Kontur. Jeweils in Querrichtung Q zueinander benachbarte Umrandungen 22 sind miteinander mittels eines aus Folie 21 gebildeten Verbindungsstegs 24 verbunden. Das in den Figuren 4 und 5 gezeigte Folienprofil 12 kann bei der Ausführung eines erfindungsgemäßen Verfahrens zur Herstellung einer erfindungsgemäßen Fluidkammermatte 13 gemäß einem bevorzugten Ausführungsbeispiel (siehe Figur 6) als Halbzeug gebildet und verwendet werden.

Die teilweise aufgebrochene Darstellung in Figur 6 zeigt, dass in weiteren Schritten des Herstellungsverfahrens in jedem Hohlraum 20 jeweils zwei Fluidkammern 25 voneinander abgetrennt wurden. Jede Fluidkammer 25 umfasst ihrerseits, wie noch nachfolgend erläutert wird, zwei fluidisch miteinander verbundene Fluidteilkammern 26. Betrachtet werden zunächst die in Figur 6 in der linken Hälfte der Fluidkammermatte 13 angeordneten Fluidkammern 25. Um diese in dem jeweils zugeordneten Hohlraum längenmäßig zu begrenzen, wurden an einer ersten bezüglich der Längsrichtung L gewählten Position 31, die an dem Längsende 14 liegt, und an einer davon in Längsrichtung L beabstandeten zweiten Position 32 jeweils eine senkrecht zu der Längsrichtung L verlaufende Verbindung 34 bzw. 35 zwischen den beiden sich jeweils gegenüberliegenden, den Hohlraum 20 begrenzenden Folienbereichen ausgebildet. Die Verbindungen 35 stellen eine längenmäßige Begrenzung für die im Beispiel fünf in Figur 6 rechts liegenden Fluidkammern 25 dar. An dem gegenüberliegenden Längsende 15 werden fünf Fluidkammern 25 dadurch längenmäßig begrenzt, dass an einer bezüglich der Längsrichtung L gewählten dritten Position 33 in je einem Hohlraum 20 eine senkrecht zu der Längsrichtung L verlaufende Verbindung 36 zwischen den beiden sich gegenüberliegenden, den Hohlraum begrenzenden Folienbereichen gebildet ist. Die in Figur 6 gezeigte Fluidkammermatte 13 weist somit insgesamt zehn Fluidkammern 25 auf, wobei je fünf Fluidkammern 25 in einer ersten Gruppe nebeneinander liegen und fünf weitere Fluidkammern 25 in einer zweiten Gruppe nebeneinander liegen. An jede Fluidkammer 25 ist eine Fluidleitung 27, in dem Beispiel ein Luftschlauch, angeschlossen. Die Fluidleitungen 27 sind in Figur 6 verkürzt gezeigt. Die nicht mit dargestellten Längsenden der Fluidleitungen 27 können mit einer Fluidversorgungseinrichtung, zum Beispiel mit einer Druckluftversorgungseinrichtung, die mit Ventilen und mit einer Steuerung ausgestattet ist, verbunden sein.

In dem gewählten Ausführungsbeispiel wurden die Verbindungen 34, 35 und 36 mittels eines Hochfrequenz-Schweißverfahrens hergestellt. Insofern handelt es sich dabei um Schweißnähte, die in den Aufbrüchen von Figur 6 schraffiert dargestellt sind. Die erste Position 31 befindet sich an dem einen Längsende 14 der Fluidkammermatte 13. Bei der Herstellung wurde dort ein Längsende der Fluidleitung 27 zwischen den beiden sich dort gegenüberliegenden, den Hohlraum 20 begrenzenden Folienbereichen angeordnet. Die dortige Verbindung 34 schließt an der Position 31 den sich um die Fluidleitung 27 erstreckenden Hohlraumquerschnitt fluiddicht ab. Im Bereich jeder Verbindung 34 ist eine Fluidleitung mit den angrenzenden Folienbereichen und sind diese Folienbereiche miteinander luftdicht verschweißt. Die zweite Position 32 befindet sich zwischen den beiden Längsenden 14 und 15. Die dort zur längenmäßigen Begrenzung der beiden angrenzenden Fluidkammern 25 hergestellte Verbindung 35, d. h. die dort ausgebildete Schweißnaht, schließt den vollständigen Hohlraumquerschnitt des Hohlraumes 20 an der zweiten Position 32 fluiddicht ab. Die Ausgestaltung an der dritten Position 33 entspricht derjenigen an der ersten Position 31.

Bei dem Ausführungsbeispiel ist bei allen fünf Fluidkammern 25 der in Figur 6 links angeordneten Gruppe an einer jeweiligen Fluidkammer 25 zwischen deren beiden sie längenmäßig begrenzenden Verbindungen 34, 35 zur Bildung von jeweils zwei Fluidteilkammern 26 eine Verbindung 30 zwischen den beiden sich dort gegenüberliegenden Folienbereich ausgebildet. Jede Verbindung 30 belässt zwei Fluiddurchlässe 28, 29. Eine entsprechende Ausgestaltung ist auch bei den fünf Fluidkammern 25 der in Figur 6 rechts angeordneten Gruppe vorhanden. Bei den Verbindungen 30 handelt es sich um sog. Abheftungen, die mittels eines Hochfrequenz-Schweißprozesses erzeugt wurden. Die jeweils fünf Verbindungen 30 liegen in einer jeweiligen Reihe nebeneinander in einem jeweiligen Längenteilabschnitt 37 der Fluidkammermatte 13, die als Biegescharnier 38 genutzt werden kann.

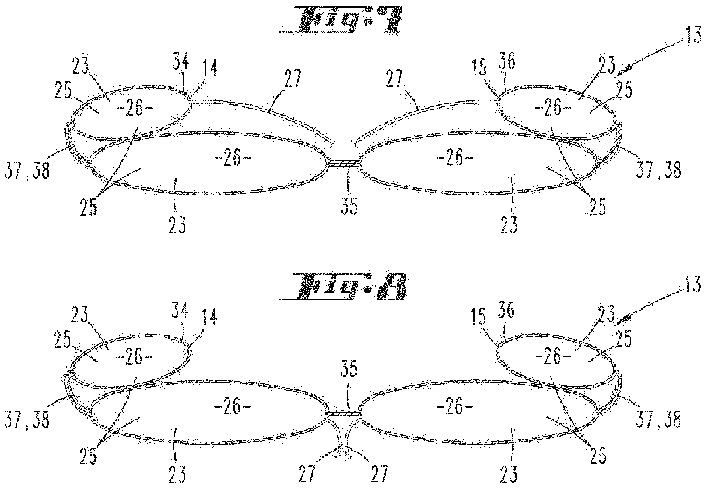

Figur 7 erläutert eine bevorzugte Nutzung der Biegescharniere 38. Der gezeigte Querschnitt der Fluidkammermatte 13 veranschaulicht, dass die an den Längsrand 14 angrenzenden Fluidteilkammern 26 und die an den zweiten Längsrand 15 angrenzenden Fluidteilkammern 26 um ihr jeweiliges Biegescharnier 38 in den in Figur 6 angedeuteten Schwenkrichtungen 39 verschwenkt wurden, so dass eine jeweilige verschwenkte Fluidteilkammer 26 an der zu ihrer Fluidkammer 25 gehörenden zweiten Fluidteilkammer 26 seitlich anliegt. In dem Beispiel, d. h. nicht notwendig, besitzen die an die Längsränder 14, 15 angrenzenden Fluidteilkammern 26 eine im Vergleich zu den an die Verbindungen 35 angrenzenden Fluidteilkammern 26 eine geringere Erstreckung in Längsrichtung L. Wie Figur 7 zeigt, resultiert daraus in einem mittleren Bereich der Fluidkammermatte 13 eine geringere mögliche Hubhöhe als in den beiden Randbereichen, in denen annähernd der doppelte Hub zur Verfügung steht. Die Figuren 6 und 7 zeigen auch, dass die Fluidkammermatte 13 in dem Beispiel in Bezug auf eine durch die zweite Position 32 führenden Querschnittsebene achsensymmetrisch ausgebildet ist.

Figur 8 zeigt eine von Figur 7 abgewandelte Ausführungsform. Auch dabei befindet sich die erste Position 31 an einem Längsende 14 der Fluidkammermatte 13. Allerdings verschließt die dort hergestellte Verbindung den vollständigen Hohlraumquerschnitt an der ersten Position 31 fluiddicht. Die Fluidleitung 27 ist an die Fluidkammer 25 fluiddicht durch einen Folienbereich, der angrenzend zu der zweiten Position 32 liegt, angeschlossen. Bei der in Figur 8 rechts daneben liegenden zweiten Fluidkammer 25 ist eine achsensymmetrische Gestaltung gewählt.

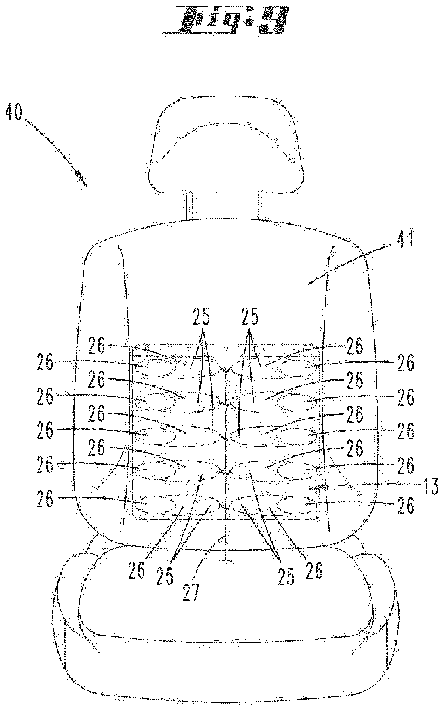

Figur 9 zeigt einen Fahrzeugsitz 40, in dessen Rückenlehne, wie durch verdeckte und daher gestrichelte Kanten angedeutet ist, die in Figur 8 dargestellte Fluidkammermatte 13 in der dort ebenfalls gezeigten Anordnung eingebaut ist. Die Fluidkammermatte 13 dient dort als Aktor zur Konturverstellung der Rückenlehne 41.

Wird durch die Fluidleitungen 27 Druckluft zugeführt, strömt diese zunächst in die unmittelbar an die jeweilige Fluidleitung 27 angrenzende Fluidteilkammer 26. Von dort kann die Druckluft durch die in dem Beispiel auf beiden Seiten der Verbindungen 30 verbleibenden Fluiddurchlässe 28, 29 auch in die sich anschließende zweite Fluidteilkammer 26 strömen. Insofern liegt ein von dem Fluid bzw. von Luft durchströmbares Biegescharnier 38 vor. Wird mittels der Fluidleitungen 27 Druckluft aus den Fluidkammern 25 abgelassen, um deren Volumen zu verkleinern, wirken die Fluiddurchlässe 28, 29 als Rückströmdurchlässe. Bei der in den Figuren 6 und 7 gezeigten Fluidkammermatte 13 sind die Fluidkammern 25 an den Verbindungen 34, 36 mit Integration der Fluidleitung 27 dichtgeschweißt. Hingegen sind an den Verbindungen 35 zwei in Längsrichtung L aneinandergrenzende Fluidkammern 25 jeweils ohne Fluiddurchlass dichtgeschweißt.

Alle offenbarten Merkmale sind (für sich, aber auch in Kombination untereinander) erfindungswesentlich. Die Unteransprüche charakterisieren mit ihren Merkmalen eigenständige erfinderische Weiterbildungen des Standes der Technik, insbesondere um auf Basis dieser Ansprüche Teilanmeldungen vorzunehmen.

### Bezugszeichenliste

| | | | |
|---|---|---|---|
| 1 | Fahrzeugsitz | 27 | Fluidleitung |
| 2 | Rückenlehne | 27' | Längsende |
| 3 | Luftkammer | 28 | Fluiddurchlass |
| 4 | Luftkammermatte | 29 | Fluiddurchlass |
| 5 | Schaumstoffauflage | 30 | Verbindung |
| 6 | Bezug 31 | erste | Position |
| 7 | Folie 32 | zweite | Position |
| 7' | Folie 33 | dritte | Position |
| 8 | Schweißnaht | 34 | Verbindung |
| 9 | Fluidkammer | 35 | Verbindung |
| 10 | Hubbegrenzer | 36 | Verbindung |
| 11 | Schweißverbindung | 37 | Längenteilabschnitt |
| 11' | Schweißverbindung | 38 | Biegescharnier |
| 12 | Folienprofil | 39 | Schwenkrichtung |
| 13 | Fluidkammermatte | 40 | Fahrzeugsitz |
| 14 | Längsende | 41 | Rückenlehne |
| 15 | Längsende | | |
| 16 | seitlicher Längsrand | | |
| 17 | seitlicher Längsrand | D | Dickenrichtung |
| 18 | Lasche | DL | Durchlaufrichtung |
| 19 | Lasche | L | Längsrichtung |
| 20 | Hohlraum | Q | Querrichtung |
| 21 | Folie | | |
| 22 | Umrandung | | |
| 23 | Fluid | | |
| 24 | Verbindungssteg | | |
| 25 | Fluidkammer | | |
| 26 | Fluidteilkammer | | |

## Patentansprüche

1. Verfahren zum Herstellen einer fluidbefüllbaren und volumenveränderlichen Fluidkammermatte (13), insbesondere einer Luftkammermatte für einen Fahrzeugsitz (40) zu dessen Konturverstellung, **gekennzeichnet durch** die Verfahrensschritte:
mittels eines Durchlaufverfahrens Herstellen eines Folienprofils (12), das in Bezug auf einen zu der Durchlaufrichtung (DL) senkrechten Profilquerschnitt mehrere nebeneinander angeordnete, in dem Profilquerschnitt jeweils umschlossene Hohlräume (20) aufweist, Abtrennen eines sich in Bezug auf die Durchlaufrichtung (DL) zwischen zwei Längsenden (14, 15) erstreckenden Längenabschnittes des Folienprofils (12) und zur längenmäßigen Begrenzung von je zumindest einer Fluidkammer (25) in je einem Hohlraum (20) : an einer ersten an dem Längenabschnitt bezüglich der Durchlaufrichtung (DL) gewählten Position (31) und an einer davon in Durchlaufrichtung (DL) beabstandeten zweiten Position (32) jeweils Herstellen einer quer, insbesondere senkrecht, zu der Durchlaufrichtung (DL) verlaufenden Verbindung (34, 35) zwischen zwei sich gegenüberliegenden, den Hohlraum (20) begrenzenden Folienbereichen und Anschließen von einer jeweiligen Fluidleitung (27) an eine jeweilige Fluidkammer (25).

2. Verfahren gemäß Anspruch 1, **dadurch gekennzeichnet, dass** das Folienprofil (12) mittels eines Extrudierprozesses hergestellt wird.

3. Verfahren gemäß dem vorangehenden Anspruch, **dadurch gekennzeichnet, dass** während des Extrudierprozesses innerhalb mehrerer Fluidkammern (25) je ein Hubbegrenzer, in Gestalt einer an ihren Längsenden an gegenüberliegenden Folienbereichen angeformten Lamelle, ausgebildet wird.

4. Verfahren gemäß Anspruch 1, **dadurch gekennzeichnet, dass** das Folienprofil (12) mittels eines Durchlauf-Schweißprozesses, insbesondere mittels eines Durchlauf-Hochfrequenzschweißprozesses, hergestellt wird, wobei zumindest zwei aneinander geführte Folienbahnen mittels mehrerer sich in der Durchlaufrichtung (DL) erstreckender Schweißnähte miteinander fluiddicht verbunden werden.

5. Verfahren gemäß einem der vorangehenden Ansprüche, **dadurch gekennzeichnet, dass** zur Längenbegrenzung einer Fluidkammer (25) hergestellte Verbindungen (34, 35, 36) mittels eines Schweißverfahrens, insbesondere mittels eines Hochfrequenz-Schweißverfahrens, hergestellt werden.

6. Verfahren gemäß einem der vorangehenden Ansprüche, **dadurch gekennzeichnet, dass** sich die erste Position (31) an einem Längsende (14) des Längenabschnittes befindet, dass dort vor oder während des Herstellens der Verbindung (34) ein Längsende der Fluidleitung (27) zwischen zwei sich gegenüberliegenden, den Hohlraum (20) begrenzenden Folienbereichen angeordnet wird und dass die dort hergestellte Verbindung (34) den sich an der ersten Position (31) um die Fluidleitung (27) erstreckenden Hohlraumquerschnitt fluiddicht verschließt.

7. Verfahren gemäß einem der vorangehenden Ansprüche 1 bis 5, **dadurch gekennzeichnet, dass** sich die erste Position (31) an einem Längsende (14) des Längenabschnittes befindet, dass die dort hergestellte Verbindung (34) den vollständigen Hohlraumquerschnitt an der ersten Position (31) fluiddicht verschließt und dass der Anschluss der Fluidleitung (27) an die Fluidkammer (25) fluiddicht durch einen Folienbereich, der insbesondere benachbart oder angrenzend zu der ersten oder der zweiten Position (31, 32) liegt, erfolgt.

8. Verfahren gemäß einem der vorangehenden Ansprüche, **dadurch gekennzeichnet, dass** sich die zweite Position (32) zwischen den beiden Längsenden (14 15) befindet und dass die dort hergestellte Verbindung (35) den vollständigen Hohlraumquerschnitt an der zweiten Position (32) fluiddicht verschließt.

9. Verfahren gemäß einem der vorangehenden Ansprüche, **dadurch gekennzeichnet, dass** betreffend zumindest eine Gruppe von Fluidkammern (25), die in dem Profilquerschnitt nebeneinander angeordnet sind, an einer jeweiligen Hohlkammer (25) zwischen deren beiden sie längenmäßig begrenzenden Verbindungen (34, 35) zur Bildung von Fluidteilkammern (26) zwei sich gegenüberliegende Folienbereiche mittels einer zumindest einen Fluiddurchlass (28, 29) zwischen den Fluidteilkammern (26) belassenden Verbindung (30) miteinander verbunden werden.

10. Verfahren gemäß Anspruch 9, **dadurch gekennzeichnet, dass** die zwischen Fluidteilkammern (26) einer Fluidkammer (25) ausgebildeten Verbindungen (30) in einem als Biegescharnier (38) wirkenden Längenteilabschnitt (37) der Fluidkammermatte (13) nebeneinander angeordnet sind und dass zumindest eine Gruppe von an ein Längsende (14) der Fluidkammermatte 13) und an das Biegescharnier (38) angrenzenden Fluidteilkammern (26) um das Biegescharnier (38) geschwenkt werden, insbesondere bis sie an einer zweiten Gruppe von an dieses Biegescharnier (38) angrenzenden Fluidteilkammern (26) anliegt.

11. Verfahren gemäß einem der vorangehenden Ansprüche, **dadurch gekennzeichnet, dass** die Fluidkammermatte (13) in Bezug auf eine Querschnittsebene, in der Verbindungen (35) zur längenmäßigen Begrenzung von Fluidkammern (25) ausgebildet sind, achsensymmetrisch ausgebildet wird.

12. Verfahren gemäß einem der vorangehenden Ansprüche, **dadurch gekennzeichnet, dass** das Folienprofil (12) aus Kunststoff hergestellt wird.

13. Fluidbefüllbare und volumenveränderliche Fluidkammermatte (13), insbesondere Luftkammermatte zur Verwendung als Aktuator für einen Fahrzeugsitz (40) zu dessen Konturverstellung, aufweisend zumindest eine von zwei sich gegenüberliegenden Folienbereichen berandete Fluidkammer (25), **dadurch gekennzeichnet, dass** die Fluidkammermatte (13) unter Verwendung eines mittels eines Durchlaufverfahrens hergestellten, sich in einer Längsrichtung (L) zwischen zwei Längsenden (14, 15) erstreckenden Folienprofils (12) hergestellt ist, das in einem zu der Längsrichtung (L) senkrechten Profilquerschnitt mehrere nebeneinander angeordnete, in dem Profilquerschnitt jeweils umschlossene Hohlräume (20) aufweist, dass zur längenmäßigen Begrenzung von je zumindest einer Fluidkammer (25) in je einem Hohlraum (20) an einer ersten bezüglich der Längsrichtung (L) gewählten Position (31) und an einer davon in Längsrichtung (L) beabstandeten zweiten Position (32) jeweils eine quer, insbesondere senkrecht, zu der Längsrichtung (L) verlaufende Verbindung (35, 36) zwischen zwei sich gegenüberliegenden, den Hohlraum (20) begrenzenden Folienbereichen ausgebildet ist und dass eine jeweilige Fluidleitung (27) an eine jeweilige Fluidkammer (25) angeschlossen ist.

14. Fluidkammermatte (13) gemäß Anspruch 13, **dadurch gekennzeichnet, dass** das Folienprofil (12) mittels eines Extrudierprozesses oder mittels eines Durchlauf-Schweißprozesses hergestellt ist.

15. Fluidkammermatte (13) gemäß einem der vorangehenden Ansprüche 13 bis 14, **dadurch gekennzeichnet, dass** eine Fluidkammer (25) in Längsrichtung (L) der Fluidkammermatte (13) begrenzende Verbindungen (34, 35, 36) mittels eines Schweißverfahrens, insbesondere mittels eine Hochfrequenz-Schweißprozesses, hergestellt sind.

16. Fluidkammermatte (13) gemäß einem der vorangehenden Ansprüche 13 bis 15, **dadurch gekennzeichnet, dass** sich die erste Position (31) an einem Längsende (14) der Fluidkammermatte (13) befindet, dass dort ein Längsende (28) des Fluidschlauches (27) zwischen zwei sich gegenüberliegenden, den Hohlraum (20) begrenzenden Folienbereichen angeordnet ist und dass die dort hergestellte Verbindung (34) den sich an der ersten Position um den Fluidschlauch (27) erstreckenden Hohlraumquerschnitt fluiddicht verschließt.

17. Fluidkammermatte (13) gemäß einem der vorangehenden Ansprüche 13 bis 15, **dadurch gekennzeichnet, dass** sich die erste Position (31) an einem Längsende (14) der Fluidkammermatte (13) befindet, dass die dort hergestellte Verbindung (34) den vollständigen Hohlraumquerschnitt an der ersten Position (31) fluiddicht verschließt und dass der Fluidschlauch (27) an die Fluidkammer (25) fluiddicht durch einen Folienbereich, der insbesondere benachbart oder angrenzend zu der ersten oder der zweiten Position (31,32) liegt, angeschlossen ist.

18. Fluidkammermatte (13) gemäß einem der vorangehenden Ansprüche 13 bis 17, **dadurch gekennzeichnet, dass** sich die zweite Position (32) zwischen den beiden Längsenden (14, 15) befindet und dass die dort zur längenmäßigen Begrenzung der Fluidkammer (25) hergestellte Verbindung (35) den vollständigen Hohlraumquerschnitt an der zweiten Position fluiddicht verschließt.

19. Fluidkammermatte (13) gemäß einem der vorangehenden Ansprüche 13 bis 18, **dadurch gekennzeichnet, dass** betreffend zumindest eine Gruppe von Fluidkammern (25), die in einem Profilquerschnitt nebeneinander angeordnet sind, an einer jeweiligen Hohlkammer (25) zwischen deren beiden sie längenmäßig begrenzenden Verbindungen (34, 35) zur Bildung von Fluidteilkammern (26) zwei sich gegenüberliegende Folienbereiche mittels einer zumindest einen Fluiddurchlass (28, 29) zwischen den Fluidteilkammern (26) belassenden Verbindung (30) miteinander verbunden sind.

20. Fluidkammermatte (13) gemäß Anspruch 19, **dadurch gekennzeichnet, dass** die zwischen zwei Fluidteilkammern (26) einer Fluidkammer (25) ausgebildeten Verbindungen (34, 35, 36) in einem als Biegescharnier (38) wirkenden Längenteilabschnitt (37) der Fluidkammermatte (13) nebeneinander angeordnet sind und dass zumindest eine Gruppe von an ein Längsende (14) der Fluidkammermatte (13) und an das Biegescharnier (38) angrenzenden Fluidteilkammern (26) um das Biegescharnier (38) geschwenkt ist, insbesondere bis sie an einer zweiten Gruppe von an dieses Biegescharnier (38) angrenzenden Fluidteilkammern (26) anliegt.

21. Fluidkammermatte (13) gemäß einem der vorangehenden Ansprüche 13 bis 19, **dadurch gekennzeichnet, dass** die Fluidkammermatte (13) in Bezug auf eine Querschnittsebene, in der Verbindungen (35) zur längenmäßigen Begrenzung von Fluidkammern (25) ausgebildet sind, achsensymmetrisch ausgebildet ist.

22. Fluidkammermatte (13) gemäß einem der vorangehenden Ansprüche 13 bis 21, **dadurch gekennzeichnet, dass** das Folienprofil (12) aus Kunststoff hergestellt ist.

23. Fahrzeugsitz (40), aufweisend eine Fluidkammermatte (13), **dadurch gekennzeichnet, dass** es sich bei der Fluidkammermatte (13) um eine Fluidkammermatte (13) gemäß einem der Ansprüche 13 bis 22 handelt.

## Claims

1. Method for producing a fluid-fillable and volume-changeable fluid chamber mat (13), in particular an air chamber mat for a vehicle seat (40) for adjusting the contours thereof, **characterized by** the following method steps:
producing, by means of a continuous operation, a film profile (12) which, with respect to a profile cross section which is perpendicular to the flow-through direction (DL), has a plurality of cavities (20) which are arranged next to one another and are each enclosed in the profile cross section, severing a length portion of the film profile (12) extending between two longitudinal ends (14, 15) with respect to the flow-through direction (DL) and, for delimiting the length of at least one fluid chamber (25) in each cavity (20): at a first position (31) selected on the length portion with respect to the flow-through direction (DL) and at a second position (32) spaced apart therefrom in the flow-through direction (DL) in each case producing a connection (34, 35), which runs transversely, in particular perpendicularly, to the flow-through direction (DL), between two opposite film regions delimiting the cavity (20), and connecting a respective fluid line (27) to a respective fluid chamber (25).

2. Method according to Claim 1, **characterized in that** the film profile (12) is produced by means of an extrusion process.

3. Method according to the preceding claim, **characterized in that**, during the extrusion process, a respective stroke limiter is formed within a plurality of fluid chambers (25), in the form of a lamella integrally formed at the longitudinal ends of said fluid chambers on opposite film regions.

4. Method according to Claim 1, **characterized in that** the film profile (12) is produced by means of a continuous welding process, in particular by means of a continuous high-frequency welding process, wherein at least two film webs which are guided on one another are connected to one another in a fluid-tight manner by means of a plurality of weld seams extending in the flow-through direction (DL).

5. Method according to one of the preceding claims, **characterized in that** connections (34, 35, 36) which are produced for delimiting the length of a fluid chamber (25) are produced by means of a welding method, in particular by means of a high-frequency welding method.

6. Method according to one of the preceding claims, **characterized in that** the first position (31) is located at a longitudinal end (14) of the length portion, **in that**, before or during the production of the connection (34), a longitudinal end of the fluid line (27) is arranged therebetween two opposite film regions delimiting the cavity (20), and **in that** the connection (34) produced there fluid-tightly closes the cavity cross section extending around the fluid line (27) at the first position (31).

7. Method according to one of the preceding Claims 1 to 5, **characterized in that** the first position (31) is located at a longitudinal end (14) of the length portion, **in that** the connection (34) produced there fluid-tightly closes the entire cavity cross section at the first position (31), and **in that** the connection of the fluid line (27) to the fluid chamber (25) takes place fluid-tightly by means of a film region which lies in particular adjacent to or bordering the first or second position (31, 32).

8. Method according to one of the preceding claims, **characterized in that** the second position (32) is located between the two longitudinal ends (14, 15), and **in that** the connection (35) produced there fluid-tightly closes the entire cavity cross section at the second position (32).

9. Method according to one of the preceding claims, **characterized in that**, regarding at least one group of fluid chambers (25) which are arranged next to one another in the profile cross section, in order to form fluid sub chambers (26) at a respective hollow chamber (25) between the two connections (34, 35) of the fluid chambers, the connections delimiting the length thereof, two opposite film regions are connected to each other by means of a connection (30) leaving at least one fluid passage (28, 29) between the fluid sub chambers (26).

10. Method according to Claim 9, **characterized in that** the connections (30) formed between fluid sub chambers (26) of a fluid chamber (25) are arranged next to one another in a length subsection (37) of the fluid chamber mat (13), the length subsection acting as a bending hinge (38), and **in that** at least one group of fluid sub chambers (26) bordering a longitudinal end (14) of the fluid chamber mat (13) and the bending hinge (38) are pivoted about the bending hinge (38), in particular until it lies against a second group of fluid sub chambers (26) bordering said bending hinge (38).

11. Method according to one of the preceding claims, **characterized in that** the fluid chamber mat (13) is formed axially symmetrically with respect to a cross-sectional plane in which connections (35) for delimiting the length of fluid chambers (25) are formed.

12. Method according to one of the preceding claims, **characterized in that** the film profile (12) is produced from plastic.

13. Fluid-fillable and volume-changeable fluid chamber mat (13), in particular air chamber mat for use as an actuator for a vehicle seat (40) for adjusting the contours thereof, having at least one fluid chamber (25) which is bordered by two opposite film regions, **characterized in that** the fluid chamber mat (13) is produced using a film profile (12) which is produced by means of a continuous operation, extends in a longitudinal direction (L) between two longitudinal ends (14, 15) and, in a profile cross section perpendicular to the longitudinal direction (L), has a plurality of cavities (20) which are arranged next to one another and are in each case enclosed in the profile cross section, **in that**, for delimiting the length of at least one fluid chamber (25) in each cavity (20), at a first position (31) selected with respect to the longitudinal direction (L) and at a second position (32) spaced apart therefrom in the longitudinal direction (L) a connection (35, 36), which runs transversely, in particular perpendicularly, to the longitudinal direction (L), is in each case formed between two opposite film regions delimiting the cavity (20), and **in that** a respective fluid line (27) is connected to a respective fluid chamber (25).

14. Fluid chamber mat (13) according to Claim 13, **characterized in that** the film profile (12) is produced by means of an extrusion process or by means of a continuous welding process.

15. Fluid chamber mat (13) according to either of the preceding Claims 13 and 14, **characterized in that** connections (34, 35, 36) delimiting a fluid chamber (25) in the longitudinal direction (L) of the fluid chamber mat (13) are produced by means of a welding method, in particular by means of a high-frequency welding process.

16. Fluid chamber mat (13) according to one of the preceding Claims 13 to 15, **characterized in that** the first position (31) is located at a longitudinal end (14) of the fluid chamber mat (13), **in that** a longitudinal end (28) of the fluid line (27) is arranged therebetween two opposite film regions delimiting the cavity (20), and **in that** the connection (34) produced there fluid-tightly closes the cavity cross section extending around the fluid line (27) at the first position.

17. Fluid chamber mat (13) according to one of the preceding Claims 13 to 15, **characterized in that** the first position (31) is located at a longitudinal end (14) of the fluid chamber mat (13), **in that** the connection (34) produced there fluid-tightly closes the entire cavity cross section at the first position (31), and **in that** the fluid line (27) is connected fluid-tightly to the fluid chamber (25) by means of a film region which lies in particular adjacent to or bordering the first or the second position (31, 32).

18. Fluid chamber mat (13) according to one of the preceding Claims 13 to 17, **characterized in that** the second position (32) is located between the two longitudinal ends (14, 15), and **in that** the connection (35) produced there for delimiting the length of the fluid chamber (25) fluid-tightly closes the entire cavity cross section at the second position.

19. Fluid chamber mat (13) according to one of the preceding Claims 13 to 18, **characterized in that** regarding at least one group of fluid chambers (25) which are arranged next to one another in a profile cross section, in order to form fluid sub chambers (26) at a respective hollow chamber (25) between the two connections (34, 35) of the fluid chambers, the connections delimiting the length thereof, two opposite film regions are connected to each other by means of a connection (30) leaving at least one fluid passage (28, 29) between the fluid sub chambers (26).

20. Fluid chamber mat (13) according to Claim 19, **characterized in that** the connections (34, 35, 36) formed between two fluid sub chambers (26) of a fluid chamber (25) are arranged next to one another in a length subsection (37) of the fluid chamber mat (13), the length subsection acting as a bending hinge (38), and **in that** at least one group of fluid sub chambers (26) bordering a longitudinal end (14) of the fluid chamber mat (13) and the bending hinge (38) are pivoted about the bending hinge (38), in particular until it lies against a second group of fluid sub chambers (26) bordering said bending hinge (38).

21. Fluid chamber mat (13) according to one of the preceding Claims 13 to 19, **characterized in that** the fluid chamber mat (13) is formed axially symmetrically with respect to a cross-sectional plane in which connections (35) for delimiting the length of fluid chambers (25) are formed.

22. Fluid chamber mat (13) according to one of the preceding Claims 13 to 21, **characterized in that** the film profile (12) is produced from plastic.

23. Vehicle seat (40) having a fluid chamber mat (13), **characterized in that** the fluid chamber mat (13) is a fluid chamber mat (13) according to one of Claims 13 to 22.

## Revendications

1. Procédé de fabrication d'une garniture à chambre à fluide (13) remplissable par un fluide et variable en volume, notamment d'une garniture à chambre à air pour un siège de véhicule (40) pour l'ajustement de son contour, **caractérisé par** les étapes de procédé suivantes :
au moyen d'un procédé continu, la fabrication d'un profilé de feuille (12), qui comprend, relativement à une coupe transversale de profilé perpendiculaire à la direction de déplacement (DL), plusieurs espaces vides (20) agencés les uns à côté des autres, chacun enfermés dans la coupe transversale de profilé, la séparation d'une section longitudinale du profilé de feuille (12) s'étendant relativement à la direction de déplacement (DL) entre deux extrémités longitudinales (14, 15) et, pour la délimitation longitudinale d'au moins à chaque fois une chambre à fluide (25) dans chaque espace vide (20) : à une première position (31) choisie sur la section longitudinale par rapport à la direction de déplacement (DL) et à une deuxième position (32) espacée de celle-ci dans la direction de déplacement (DL), à chaque fois la fabrication d'une liaison (34, 35) s'étendant transversalement, notamment perpendiculairement, à la direction de déplacement (DL) entre deux zones de feuille opposées, délimitant l'espace vide (20), et le raccord d'une conduite de fluide respective (27) à une chambre à fluide respective (25).

2. Procédé selon la revendication 1, **caractérisé en ce que** le profilé de feuille (12) est fabriqué au moyen d'un processus d'extrusion.

3. Procédé selon la revendication précédente, **caractérisé en ce qu'**un limiteur de course, sous la forme d'une lamelle conformée à ses extrémités longitudinales sur des zones de feuille opposées, est formé pendant le processus d'extrusion à l'intérieur de plusieurs chambres à fluide (25).

4. Procédé selon la revendication 1, **caractérisé en ce que** le profilé de feuille (12) est fabriqué au moyen d'un processus de soudage continu, notamment au moyen d'un processus de soudage haute fréquence continu, au moins deux bandes de feuille acheminées l'une à côté de l'autre étant reliées l'une à l'autre de manière étanche aux fluides au moyen de plusieurs joints de soudure s'étendant dans la direction de déplacement (DL).

5. Procédé selon l'une quelconque des revendications précédentes, **caractérisé en ce que** des liaisons (34, 35, 36) fabriquées pour la délimitation longitudinale d'une chambre à fluide (25) sont fabriquées au moyen d'un procédé de soudage, notamment au moyen d'un procédé de soudage haute fréquence.

6. Procédé selon l'une quelconque des revendications précédentes, **caractérisé en ce que** la première position (31) se trouve à une extrémité longitudinale (14) de la section longitudinale, **en ce qu'**avant ou pendant la fabrication de la liaison (34), une extrémité longitudinale de la conduite de fluide (27) y est agencée entre deux zones de feuille opposées, délimitant l'espace vide (20), et **en ce que** la liaison (34) qui y est fabriquée ferme de manière étanche aux fluides la coupe transversale d'espace vide s'étendant autour de la conduite de fluide (27) à la première position (31).

7. Procédé selon l'une quelconque des revendications 1 à 5 précédentes, **caractérisé en ce que** la première position (31) se trouve à une extrémité longitudinale (14) de la section longitudinale, **en ce que** la liaison (34) qui y est fabriquée ferme de manière étanche aux fluides la coupe transversale d'espace vide entière à la première position (31), et **en ce que** le raccordement de la conduite de fluide (27) à la chambre à fluide (25) a lieu de manière étanche aux fluides par une zone de feuille qui est notamment voisine ou adjacente à la première ou à la deuxième position (31, 32).

8. Procédé selon l'une quelconque des revendications précédentes, **caractérisé en ce que** la deuxième position (32) se trouve entre les deux extrémités longitudinales (14, 15) et **en ce que** la liaison (35) qui y est fabriquée ferme de manière étanche aux fluides la coupe transversale d'espace vide entière à la deuxième position (32).

9. Procédé selon l'une quelconque des revendications précédentes, **caractérisé en ce qu'**en ce qui concerne au moins un groupe de chambres à fluide (25), qui sont agencées les unes à côté des autres dans la coupe transversale de profilé, au niveau d'une chambre vide respective (25), entre ses deux liaisons (34, 35) qui la délimitent longitudinalement, pour la formation de chambres partielles à fluide (26), deux zones de feuille opposées sont reliées l'une à l'autre au moyen d'une liaison (30) laissant au moins un passage de fluide (28, 29) entre les chambres partielles à fluide (26).

10. Procédé selon la revendication 9, **caractérisé en ce que** les liaisons (30) formées entre des chambres partielles à fluide (26) d'une chambre à fluide (25) sont agencées les unes à côté des autres dans une section partielle longitudinale (37), agissant en tant que charnière de flexion (38), de la garniture à chambre à fluide (13), et **en ce qu'**au moins un groupe de chambres partielles à fluide (26) adjacentes à une extrémité longitudinale (14) de la garniture à chambre à fluide (13) et à la charnière de flexion (38) sont pivotées autour de la charnière de flexion (38), notamment jusqu'à ce qu'elles soient appliquées contre un deuxième groupe de chambres partielles à fluide (26) adjacentes à cette charnière de flexion (38).

11. Procédé selon l'une quelconque des revendications précédentes, **caractérisé en ce que** la garniture à chambre à fluide (13) est configurée sous forme symétrique axialement relativement à un plan de coupe transversale, dans lequel des liaisons (35) pour la délimitation longitudinale de chambres à fluide (25) sont formées.

12. Procédé selon l'une quelconque des revendications précédentes, **caractérisé en ce que** le profilé de feuille (12) est fabriqué en matière plastique.

13. Garniture à chambre à fluide (13) remplissable par un fluide et variable en volume, notamment garniture à chambre à air pour une utilisation en tant qu'actionneur pour un siège de véhicule (40) pour l'ajustement de son contour, comprenant au moins une chambre à fluide (25) bordée par deux zones de feuille opposées, **caractérisée en ce que** la garniture à chambre à fluide (13) est fabriquée en utilisant un profilé de feuille (12) fabriqué au moyen d'un procédé continu, s'étendant dans une direction longitudinale (L) entre deux extrémités longitudinales (14, 15), qui comprend dans une coupe transversale de profilé perpendiculaire à la direction longitudinale (L), plusieurs espaces vides (20) agencés les uns à côté des autres, chacun enfermés dans la coupe transversale de profilé, **en ce que**, pour la délimitation longitudinale d'au moins à chaque fois une chambre à fluide (25) dans chaque espace vide (20), à une première position (31) choisie par rapport à la direction longitudinale (L) et à une deuxième position (32) espacée de celle-ci dans la direction longitudinale (L), à chaque fois une liaison (35, 36) s'étendant transversalement, notamment perpendiculairement, à la direction longitudinale (L) est formée entre deux zones de feuille opposées, délimitant l'espace vide (20), et **en ce qu'**une conduite de fluide respective (27) est raccordée à une chambre à fluide respective (25).

14. Garniture à chambre à fluide (13) selon la revendication 13, **caractérisée en ce que** le profilé de feuille (12) est fabriqué au moyen d'un processus d'extrusion ou au moyen d'un processus de soudage continu.

15. Garniture à chambre à fluide (13) selon l'une quelconque des revendications 13 à 14 précédentes, **caractérisée en ce que** des liaisons (34, 35, 36) délimitant une chambre à fluide (25) dans la direction longitudinale (L) de la garniture à chambre à fluide (13) sont fabriquées au moyen d'un procédé de soudage, notamment au moyen d'un processus de soudage haute fréquence.

16. Garniture à chambre à fluide (13) selon l'une quelconque des revendications 13 à 15 précédentes, **caractérisée en ce que** la première position (31) se trouve à une extrémité longitudinale (14) de la garniture à chambre à fluide (13), **en ce qu'**une extrémité longitudinale (28) du tuyau à fluide (27) y est agencée entre deux zones de feuille opposées, délimitant l'espace vide (20), et **en ce que** la liaison (34) qui y est fabriquée ferme de manière étanche aux fluides la coupe transversale d'espace vide s'étendant autour du tuyau à fluide (27) à la première position.

17. Garniture à chambre à fluide (13) selon l'une quelconque des revendications 13 à 15 précédentes, **caractérisée en ce que** la première position (31) se trouve à une extrémité longitudinale (14) de la garniture à chambre à fluide (13), **en ce que** la liaison (34) qui y est fabriquée ferme de manière étanche aux fluides la coupe transversale d'espace vide entière à la première position (31) et **en ce que** le tuyau à fluide (27) est raccordé à la chambre à fluide (25) de manière étanche aux fluides par une zone de feuille, qui est notamment voisine ou adjacente à la première ou à la deuxième position (31, 32).

18. Garniture à chambre à fluide (13) selon l'une quelconque des revendications 13 à 17 précédentes, **caractérisée en ce que** la deuxième position (32) se trouve entre les deux extrémités longitudinales (14, 15) et **en ce que** la liaison (35) qui y est fabriquée pour la délimitation longitudinale de la chambre à fluide (25) ferme de manière étanche aux fluides la coupe transversale d'espace vide entière à la deuxième position.

19. Garniture à chambre à fluide (13) selon l'une quelconque des revendications 13 à 18 précédentes, **caractérisée en ce qu'**en ce qui concerne au moins un groupe de chambres à fluide (25), qui sont agencées les unes à côté des autres dans une coupe transversale de profilé, au niveau d'une chambre vide respective (25), entre ses deux liaisons (34, 35) qui la délimitent longitudinalement, pour la formation de chambres partielles à fluide (26), deux zones de feuille opposées sont reliées l'une à l'autre au moyen d'une liaison (30) laissant au moins un passage de fluide (28, 29) entre les chambres partielles à fluide (26).

20. Garniture à chambre à fluide (13) selon la revendication 19, **caractérisée en ce que** les liaisons (34, 35, 36) formées entre deux chambres partielles à fluide (26) d'une chambre à fluide (25) sont agencées dans une section partielle longitudinale (37), agissant en tant que charnière de flexion (38), de la garniture à chambre à fluide (13), et **en ce qu'**au moins un groupe de chambres partielles à fluide (26) adjacentes à une extrémité longitudinale (14) de la garniture à chambre à fluide (13) et à la charnière de flexion (38) sont pivotées autour de la charnière de flexion (38), notamment jusqu'à ce qu'elles soient appliquées contre un deuxième groupe de chambres partielles à fluide (26) adjacentes à cette charnière de flexion (38).

21. Garniture à chambre à fluide (13) selon l'une quelconque des revendications 13 à 19 précédentes, **caractérisée en ce que** la garniture à chambre à fluide (13) est configurée sous forme symétrique axialement relativement à un plan de coupe transversale, dans lequel des liaisons (35) pour la délimitation longitudinale de chambres à fluide (25) sont formées.

22. Garniture à chambre à fluide (13) selon l'une quelconque des revendications 13 à 21 précédentes, **caractérisée en ce que** le profilé de feuille (12) est fabriqué en matière plastique.

23. Siège de véhicule (40), comprenant une garniture à chambre à fluide (13), **caractérisé en ce que** la garniture à chambre à fluide (13) consiste en une garniture à chambre à fluide (13) selon l'une quelconque des revendications 13 à 22.
